# DEMANDE DE BREVET EUROPEEN

(11) **EP 1 186 491 A1**
(43) Date de publication de la demande: **13.03.2002**
(21) Numéro de dépôt: 01402313.9
(22) Date de dépôt: 06.09.2001
(51) Int. Cl.: B60R 25/10, G08C 17/02

(54) **"Système de surveillance à distance d'un objet"**

(30) Priorité: 07.09.2000 FR 0011426
(71) Demandeur: FRANCE TELECOM, 75015 Paris (FR)
(72) Inventeur: Bjork, Eric, 81600 Montans (FR)
(74) Mandataire: Jacobson, Claude

(57) **Abrégé**

Ce système de surveillance à distance d'un objet comporte un dispositif de télécommunication (4) comprenant des moyens d'émission, à travers un réseau de télécommunication sans fil (8), de signaux de commande à destination de moyens (14) de gestion de l'activation ou de l'inhibition d'au moins une partie d'éléments d'exécution de fonctions prédéterminées de l'objet, en fonction des signaux de commande.

En outre, l'objet est associé à des moyens (16,20) d'extraction d'informations relatives à celui-ci et à des moyens (36) de transmission desdites informations, à travers le réseau de télécommunication sans fil (8), à destination de moyens (4,6) de traitement de ces informations pour déterminer les signaux de commande.

## Description

La présente invention concerne un système de surveillance à distance d'un objet comportant un dispositif de télécommunication comprenant des moyens d'émission, à travers un réseau de télécommunication sans fil, de signaux de commande à destination de moyens de gestion de l'activation ou de l'inhibition d'au moins une partie d'éléments d'exécution de fonctions prédéterminées de l'objet, en fonction des signaux de commande.

Généralement, lorsqu'il est appliqué à la surveillance de véhicules automobiles, un tel système comporte un dispositif de coupure des fonctions essentielles du véhicule installé dans celui-ci et une alarme. Il comporte en outre par exemple un dispositif de télécommunication sans fil pour la commande à distance du dispositif de coupure et de l'alarme.

Ainsi, lors d'une effraction à laquelle assiste le propriétaire du véhicule, un tel système permet à celui-ci d'immobiliser son véhicule ou de déclencher l'alarme à distance, grâce au dispositif de télécommunication sans fil qu'il porte sur lui.

Par contre, si le propriétaire du véhicule n'assiste pas à l'effraction, avant qu'il ne s'en rende compte, il peut se passer un temps suffisamment important pour permettre au malfaiteur ayant commis l'effraction, d'être déjà loin ou bien d'avoir déjà neutralisé le dispositif de coupure. L'efficacité d'un tel système est donc limitée.

L'invention vise à remédier aux inconvénients d'un système classique, en créant un système capable de prévenir en temps réel le propriétaire de tout dysfonctionnement de son véhicule, ou d'une effraction, pour lui permettre ensuite de réagir très rapidement.

L'invention a donc pour objet un système de surveillance à distance d'un objet comportant un dispositif de télécommunication comprenant des moyens d'émission, à travers un réseau de télécommunication sans fil, de signaux de commande à destination de moyens de gestion de l'activation ou de l'inhibition d'au moins une partie d'éléments d'exécution de fonctions prédéterminées de l'objet en fonction des signaux de commande, caractérisé en ce que l'objet est associé à des moyens d'extraction d'informations relatives à celui-ci et à des moyens de transmission desdites informations, à travers le réseau de télécommunication sans fil, à destination de moyens de traitement de ces informations pour déterminer les signaux de commande.

Ainsi, un système selon l'invention peut transmettre spontanément à tout moment des informations extraites d'un véhicule automobile au propriétaire du véhicule lorsque celui-ci est muni ou est à proximité d'un dispositif de télécommunication, afin de lui permettre en retour d'agir en fonction des informations transmises.

Le système de surveillance selon l'invention peut en outre comporter une ou plusieurs des caractéristiques suivantes :
- le dispositif de télécommunication comprend en outre les moyens de traitement d'informations;
- il comporte un centre d'appels comprenant les moyens de traitement desdites informations ;
- les moyens d'extraction d'informations comprennent des moyens de localisation de l'objet ;
- l'objet est un véhicule automobile et les moyens d'extraction d'informations comprennent des moyens de visualisation de l'intérieur et/ou l'extérieur du véhicule ;
- les moyens d'extraction d'informations comprennent des moyens d'analyse du fonctionnement des éléments d'exécution de fonctions prédéterminées de l'objet ;
- les moyens de gestion comportent des moyens d'identification du dispositif de télécommunication ;
- il comporte des moyens de stockage des informations extraites ;
- le dispositif de télécommunication est un téléphone portable ;
- les moyens de gestion comportent des moyens de mise hors service définitive d'au moins une partie des éléments d'exécution de fonctions prédéterminées ; et
- les moyens de mise hors service définitive comportent des moyens de stockage d'un code prédéterminé et des moyens de modification irréversible de ce code pour la mise hors service définitive.

L'invention sera mieux comprise à la lecture de la description qui va suivre, donnée uniquement à titre d'exemple et faite en se référant aux dessins annexés, sur lesquels :
- la Fig.1 est une vue schématique de la structure générale d'un système de surveillance selon l'invention ;
- la Fig.2 représente schématiquement la structure de moyens de mise hors service définitive pour le système de surveillance représenté à la figure 1 ; et
- la Fig.3 illustre le fonctionnement du système de surveillance de la figure 1, en cas d'effraction.

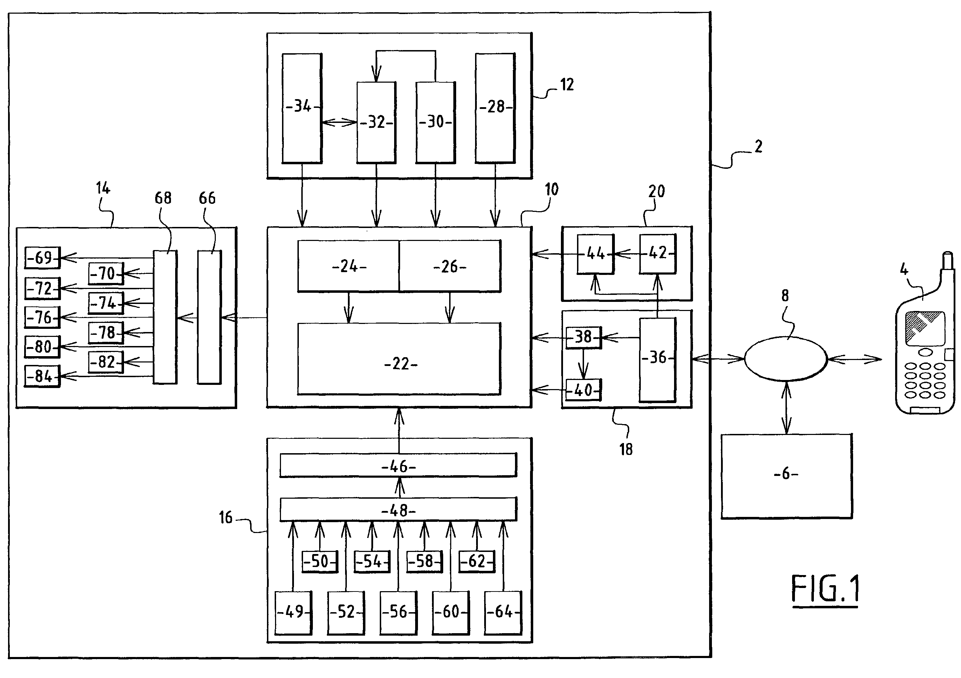

Le système représenté à la figure 1 comporte un dispositif de surveillance 2 embarqué à bord d'un véhicule automobile, un téléphone portable 4 et un centre d'appels téléphoniques 6, pouvant échanger des informations entre eux, à travers un réseau de télécommunication sans fil 8, tel qu'un réseau de type GSM.

Le dispositif de surveillance embarqué 2 comporte une unité centrale 10 connectée à des moyens 12 d'alimentation en énergie électrique, des moyens 14 de gestion de l'activation et de l'inhibition d'éléments d'exécution de fonctions prédéterminées du véhicule automobife, des moyens 16 d'extraction d'informations sur le véhicule, des moyens 18 d'émission et de réception de signaux à destination ou en provenance du téléphone portable 4 ou du centre d'appels téléphoniques 6 et des moyens 20 d'analyse de ces signaux.

L'unité centrale 10 est classiquement constituée d'un calculateur 22 comprenant par exemple un microprocesseur associé à une mémoire vive, et de moyens de stockage d'informations accessibles en lecture seule par le calculateur 22. Ces moyens de stockage comprennent une première mémoire 24 stockant des données d'identification du dispositif de surveillance embarqué 2 et une seconde mémoire 26 stockant des signaux de commande d'instructions programmables, destinés à être transmis aux moyens de gestion 14.

Les moyens 12 d'alimentation en énergie comprennent une alimentation 28, adaptée pour la fourniture à l'unité centrale 10 d'une tension continue. Cette alimentation 28 est par exemple constituée de la batterie du véhicule automobile.

Les moyens 12 d'alimentation en énergie comprennent en outre un circuit 30 de protection contre un court-circuit, adapté pour détecter une chute de tension en entrée et fournir en sortie un signal d'alarme à l'unité centrale 10, en cas de court-circuit.

Ce circuit de protection 30 est également raccordé à un circuit 32 de détection de coupure d'alimentation.

Le circuit 32 de détection de coupure d'alimentation détecte de façon classique une coupure de l'alimentation 28 en entrée et fournit, en sortie, un signal d'alarme à l'unité centrale 10, en cas de coupure de l'alimentation 28.

Les circuits 30 et 32 peuvent être réalisés par exemple au moyen d'un pont de résistances.

Enfin, les moyens 12 d'alimentation en énergie comportent une alimentation de secours 34 connectée au circuit 32 de détection de coupure d'alimentation. Cette alimentation de secours 34 est par exemple constituée d'une batterie autonome rechargeable, semblable à celle d'un téléphone portable.

Les moyens 18 d'émission et de réception de signaux comportent un émetteur-récepteur de signaux 36 de type classique associé à un modem 38 de type classique également.

Le modem 38 est bien sûr compatible avec le réseau 8 de télécommunication et est capable de décrocher automatiquement; lors de la réception d'un appel, ainsi que de décrocher et établir une communication, lors de l'émission d'un appel, et de transmettre ou recevoir des données d'informations à destination ou en provenance du téléphone portable 4 ou du centre d'appels téléphoniques 6.

Enfin, les moyens 18 d'émission et de réception des signaux comportent un décodeur de fréquences vocales 40, pour l'analyse de la fréquence d'un signal reçu et sa conversion en un code binaire exploitable par l'unité centrale 10.

Les moyens 20 d'analyse des signaux émis et reçus comportent un détecteur 42 de brouillage de signaux de type classique et des moyens 44 de localisation du dispositif de surveillance embarqué 2 et donc du véhicule automobile.

Ces moyens de localisation 44, de type classique, fournissent à chaque appel émis ou reçu, des données de localisation à l'unité centrale 10, éventuellement accompagnées d'un signal d'alarme en cas de détection de brouillage. En effet, des données de localisation sont classiquement transmises lors de transmissions de signaux conformes à la norme GSM, par exemple.

Les moyens 16 d'extraction d'informations comprennent une mémoire tampon d'entrée 46, pour le stockage temporaire de données en provenance d'une interface d'entrée 48 et à destination de l'unité centrale 10.

L'interface d'entrée 48, de type classique, est adaptée pour convertir des signaux électriques fournis par des capteurs en signaux électriques exploitables par l'unité centrale 10.

Les capteurs comprennent une alarme 49 telle que, par exemple, une alarme volumétrique, se déclenchant lors d'une effraction, un capteur 50 de niveau d'essence dans le réservoir du véhicule automobile, une caméra 52 de visualisation de l'intérieur et/ou de l'extérieur du véhicule automobile, un microphone 54 pour capter un son émis à l'intérieur et/ou à l'extérieur du véhicule, un détecteur 56 de température du moteur, un voyant d'alternateur 58, un compteur kilométrique 60, un détecteur de chocs 62 et un détecteur 64 de déclenchement d'un module à sac gonflable. Tous ces capteurs sont de type classique.

Les moyens de gestion 14 comprennent une mémoire tampon de sortie 66, similaire à la mémoire tampon d'entrée 46, pour stocker temporairement des signaux de commande d'instructions émis par l'unité centrale 10 et à destination d'une interface de sortie 68.

L'interface de sortie 68 est adaptée pour convertir les signaux de commande d'instructions émis par l'unité centrale 10 en signaux électriques capables de piloter des moyens de commande.

Les moyens de commande des moyens de gestion 14 comprennent des moyens 69 de mise hors service définitive d'au moins une partie des éléments d'exécution de fonctions prédéterminées du véhicule automobile, des moyens 70 de commande de la coupure de l'allumage électronique du véhicule automobile, des moyens 72 de commande du déclenchement de l'avertisseur sonore, des moyens 74 de commande de l'allumage des phares, des moyens 76 de commande de la coupure de la pompe à carburant, des moyens 78 de commande du verrouillage des portes, des moyens 80 de commande du déclenchement des feux de détresse, des moyens 82 de commande du clignotement des phares et des moyens 84 de commande de l'allumage ou de l'extinction des phares. Tous ces moyens de commande sont de type classique.

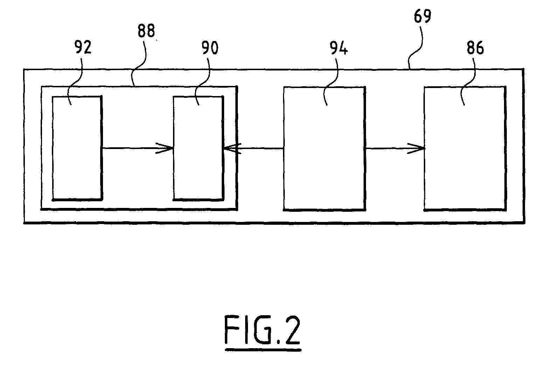

Les moyens 69 de mise hors service représentés à la figure 2 comportent un premier circuit 86 stockant un code prédéterminé.

Ils comportent également un module 88 de mise hors service, comportant un second circuit 90 composé de liaisons fusibles et stockant le même code prédéterminé que dans le premier circuit 86. Le code stocké dans le second circuit 90 peut être modifié de façon irréversible par la détérioration des liaisons fusibles au moyen d'un générateur 92 d'impulsions de courant.

Enfin, les moyens 69 de mise hors service définitive comportent un comparateur 94 qui compare en permanence les codes stockés dans les premier et second circuits 86 et 90.

Ainsi, tant que les deux codes sont égaux, les éléments d'exécution de fonctions prédéterminées fonctionnent normalement. Par contre, dès que les moyens de mise hors service 69 reçoivent en provenance de l'unité centrale 10 un signal de commande de mise hors service, le générateur d'impulsions 92 détériore de façon irréversible les liaisons fusibles du second circuit 90, de sorte que le code stocké dans ce second circuit devient différent de celui stocké dans le premier circuit 86.

Les éléments d'exécution de fonctions prédéterminées concernés sont alors mis hors service par les moyens de gestion 14. Leur fonctionnement ne pourra reprendre qu'en réinstallant un nouveau module 88 de mise hors service comportant un code identique à celui contenu dans le premier circuit 86.

Le dispositif de surveillance 2 peut en outre, par exemple, commander l'affichage d'un message "volé" sur un dispositif d'affichage du véhicule automobile, lorsque celui-ci en possède un.

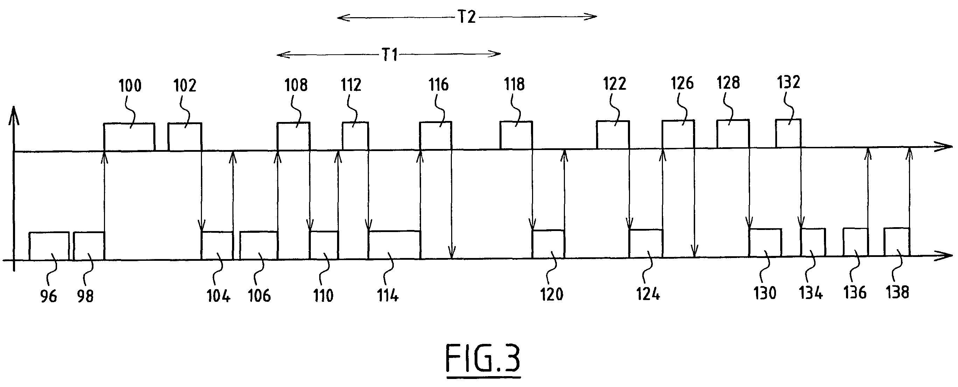

Le fonctionnement du système décrit précédemment est représenté à la figure 3, en cas d'effraction.

Lors d'une effraction du véhicule automobile, l'alarme volumétrique 49 transmet un signal d'alarme à l'unité centrale 10, au cours d'une étape d'alerte 96.

Lors d'une étape suivante de numérotation 98, le dispositif de surveillance 2 compose soit le numéro de téléphone du centre d'appels téléphoniques 6, soit le numéro du téléphone portable 4 appartenant au propriétaire du véhicule automobile. Dans la suite, le centre d'appels téléphoniques 2 ou le téléphone portable 4 sera désigné par " l'appelé ".

Ensuite, lors d'une étape 100 de décrochage, l'appelé prend la communication et transmet une demande d'identité au dispositif de surveillance 2 lors d'une étape 102.

Ensuite, lors d'une étape 104 d'identification, le dispositif de surveillance 2 transmet à l'appelé les données d'identification stockées dans la première mémoire 24.

Lors de l'étape 106 suivante, le dispositif de surveillance 2 transmet à l'appelé un signal prédéterminé informant celui-ci de l'effraction du véhicule automobile.

L'appelé demande alors, lors d'une étape 108, l'envoi de données de localisation du véhicule automobile.

Lors de l'étape 110 suivante, le dispositif de surveillance 2 transmet à l'appelé les données de localisation demandées, grâce aux moyens de localisation 44.

Ensuite, lors d'une étape 112, l'appelé demande l'envoi de photos. Alors, l'unité centrale 10 du dispositif de surveillance embarqué 2 transmet aux moyens de gestion 14, un signal de commande de mise en fonctionnement de la caméra de visualisation 52. Le dispositif de surveillance 2 transmet ensuite les images obtenues à l'appelé qui, au cours d'une étape 116 de réception, transmet au dispositif de surveillance un accusé de réception.

Au-delà d'une durée prédéterminée T1, l'appelé demande de nouveau l'envoi de données de localisation au cours d'une étape 118 identique à l'étape 108, à laquelle le dispositif de surveillance 2 répond lors d'une étape 120 identique à l'étape 110.

Au-delà d'une durée prédéterminée T2, l'appelé demande de nouveau l'envoi de photos et les reçoit, lors d'étapes 122,124 et 126 identiques aux étapes 112,114 et 116 décrites précédemment.

Ensuite, lors d'une étape 128, l'appelé transmet au dispositif de surveillance 2 une demande de coupure de l'allumage électronique du véhicule automobile.

Lors de l'étape 130 suivante, le dispositif de surveillance 2 effectue l'opération demandée, grâce aux moyens 70 de commande de coupure d'allumage électronique.

Ensuite, au cours d'une étape 132, l'appelé transmet une demande de coupure de la pompe à carburant.

De même, le dispositif de surveillance embarqué 2 effectue l'opération demandée, grâce aux moyens 76 de commande de coupure de la pompe à carburant du véhicule automobile.

Enfin, lors des deux dernières étapes 136 et 138, le dispositif de surveillance 2 transmet à l'appelé des accusés de réception de la demande de coupure de l'allumage électronique et de la demande de coupure de la pompe.

Toute demande de l'appelé effectuée lors de l'étape 102,108, 112, 118, 122, 128 ou 132, est transmise au dispositif de surveillance 2 sous la forme d'un signal sonore comportant des fréquences prédéterminées si l'appelé est le téléphone portable 4. Dans ce cas, ce signal, traduit par le décodeur de fréquences vocales 40, est transformé par l'unité centrale 10 du dispositif de surveillance en l'un des signaux de commande d'instructions stockés dans la seconde mémoire 26, pour commander les actions à effectuer en réponse à la demande.

Par contre, si l'appelé est le centre d'appels téléphonique 2, les demandes sont transmises sous la forme d'un signal d'informations binaires directement reçu par l'unité centrale 10, sans passer par le décodeur de fréquences vocales 40.

Il apparaît clairement qu'un système de surveillance à distance selon l'invention est capable de transmettre en temps réel des données d'informations sur l'objet surveillé à destination de moyens de traitement de ces informations, ce qui en retour permet de commander l'exécution de fonctions prédéterminées de l'objet, en fonction des informations transmises.

Ces informations concernent par exemple le fonctionnement de l'objet, comme par exemple la température du moteur, le kilométrage du véhicule ou bien des alarmes relatives à des évènements inattendus tels que chocs ou effractions.

Il apparaît également qu'un système de surveillance à distance selon l'invention permet de centraliser des informations transmises lorsqu'il comporte un centre d'appels téléphoniques 6.

On notera également que l'invention n'est pas limitée au mode de réalisation décrit.

Par exemple, en variante, le dispositif de télécommunication 4 est un poste téléphonique fixe raccordé au réseau de télécommunication sans fil 8, via un réseau téléphonique commuté classique.

## Revendications

1. Système de surveillance à distance d'un objet comportant un dispositif de télécommunication (4) comprenant des moyens d'émission, à travers un réseau de télécommunication sans fil (8), de signaux de commande à destination de moyens (14) de gestion de l'activation ou de l'inhibition d'au moins une partie d'éléments d'exécution de fonctions prédéterminées de l'objet en fonction des signaux de commande, **caractérisé en ce que** l'objet est associé à des moyens (16,20) d'extraction d'informations relatives à celui-ci et à des moyens (36) de transmission desdites informations, à travers le réseau de télécommunication sans fil (8), à destination de moyens (4,6) de traitement de ces informations pour déterminer les signaux de commande, lesdits moyens de gestion (14) comportant des moyens (69) de mise hors service définitive d'au moins une partie des éléments d'exécution de fonctions prédéterminées.

2. Système de surveillance selon la revendication 1, **caractérisé en ce que** le dispositif de télécommunication (4) comprend en outre les moyens de traitement d'informations.

3. Système de surveillance selon la revendication 1, **caractérisé en ce qu'**il comporte un centre d'appels (6) comprenant les moyens de traitement desdites informations.

4. Système de surveillance selon l'une quelconque des revendications 1 à 3, **caractérisé en ce que** les moyens (16,20) d'extraction d'informations comprennent des moyens (44) de localisation de l'objet.

5. Système de surveillance selon l'une quelconque des revendications 1 à 4, **caractérisé en ce que** l'objet est un véhicule automobile et **en ce que** les moyens d'extraction d'informations comprennent des moyens (52) de visualisation de l'intérieur et/ou l'extérieur du véhicule.

6. Système de surveillance selon l'une quelconque des revendications 1 à 5, **caractérisé en ce que** les moyens (16,20) d'extraction d'informations comprennent des moyens d'analyse du fonctionnement des éléments d'exécution de fonctions prédéterminées de l'objet.

7. Système de surveillance selon l'une quelconque des revendications 1 à 6, **caractérisé en ce que** les moyens de gestion (14) comportent des moyens d'identification du dispositif de télécommunication (4).

8. Système de surveillance selon l'une quelconque des revendications 1 à 7, **caractérisé en ce qu'**il comporte des moyens (46) de stockage des informations extraites.

9. Système de surveillance selon l'une quelconque des revendications 1 à 8, **caractérisé en ce que** le dispositif de télécommunication (4) est un téléphone portable.

10. Système de surveillance selon l'une quelconque des revendications 1 à 9, **caractérisé en ce que** les moyens (69) de mise hors service définitive comportent des moyens (90) de stockage d'un code prédéterminé et des moyens (92) de modification irréversible de ce code pour la mise hors service définitive.
